# EUROPÄISCHE PATENTSCHRIFT

(11) **EP 2 923 069 B1**
(45) Veröffentlichungstag und Bekanntmachung des Hinweises auf die Patenterteilung: **24.08.2016**
(21) Anmeldenummer: 13773735.9
(22) Anmeldetag: 07.10.2013
(51) Int. Cl.: F16K 47/08, F02M 63/00, F02M 59/46

(54) **VENTILEINRICHTUNG**
VALVE DEVICE
ENSEMBLE SOUPAPE

(30) Priorität: 26.11.2012 DE 102012221540
(43) Veröffentlichungstag der Anmeldung: 30.09.2015
(73) Patentinhaber: Robert Bosch GmbH, 70442 Stuttgart (DE)
(72) Erfinder: KLEINDL, Michael, 71701 Schwieberdingen (DE); LATIF, Tamim, 70180 Stuttgart (DE); SPITZNAGEL, Michael, 78606 Seitingen-Oberflacht (DE); MAESS, Matthias, 71034 Boeblingen (DE); BRUNNER, Dominik, 70563 Stuttgart (DE)
(86) Internationale Anmeldenummer: PCT/EP2013/070762
(87) Internationale Veröffentlichungsnummer: WO 2014/079623

(56) Entgegenhaltungen:
- DE-A1-102011 004 993
- DE-A1-102011 005 485
- DE-A1-102011 005 487

## Beschreibung

### Stand der Technik

Die Erfindung betrifft eine Ventileinrichtung nach dem Oberbegriff des Patentanspruchs 1 sowie eine Hochdruckpumpe nach dem nebengeordneten Patentanspruch 9.

Ventileinrichtungen, beispielsweise Auslassventile einer Hochdruckpumpe eines Kraftstoffsystems einer Brennkraftmaschine, sind vom Markt her bekannt. Häufig weisen solche Ventileinrichtungen einen Ventilkörper auf, der an einem Dichtabschnitt gegen einen gehäuseseitigen Dichtsitz anschlagen und die Ventileinrichtung somit schließen kann. In geschlossenem Zustand der Ventileinrichtung können in den an die Ventileinrichtung angeschlossenen hydraulischen Leitungen Druckpulsationen auftreten, wodurch im Bereich des Dichtabschnitts bzw. des Dichtsitzes ein Flüssigkeitsdampf ("Dampfblasen") entstehen kann. Bei der Implosion dieser Dampfblasen ergibt sich eine sogenannte Kavitationserosion an umliegenden Abschnitten des Gehäuses und/oder des Ventilkörpers.

Die DE 10 2011 004 993 A1 schlägt vor, ein Mengensteuerventil mit einem Zerfallraum zu versehen, um den Dichtsitz und den Dichtabschnitt vor Kavitationserosion zu schützen.

Aus der DE 10 2011 005 485 A1 ist eine Ventileinrichtung mit den Merkmalen des Oberbegriffs des Patentanspruchs 1 bekannt.

Hiervon ausgehend liegt der vorliegenden Erfindung die Aufgabe zugrunde, eine Ventileinrichtung anzugeben, welche einen weiter verbesserten Schutz vor Kavitationserosion ermöglicht.

### Offenbarung der Erfindung

Das der Erfindung zugrunde liegende Problem wird durch eine Ventileinrichtung nach Patentanspruch 1 sowie durch eine Hochdruckpumpe nach dem nebengeordneten Patentanspruch 9 gelöst. Vorteilhafte Weiterbildungen sind in den Unteransprüchen angegeben. Für die Erfindung wichtige Merkmale finden sich ferner in der nachfolgenden Beschreibung und in der Zeichnung, wobei die Merkmale sowohl in Alleinstellung als auch in unterschiedlichen Kombinationen für die Erfindung wichtig sein können, ohne dass hierauf nochmals explizit hingewiesen wird.

Die erfindungsgemäße Ventileinrichtung hat den Vorteil, dass die Widerstandsfähigkeit im Bereich eines Dichtsitzes und/oder eines Dichtabschnitts der Ventileinrichtung gegen Kavitationserosion deutlich verbessert wird. Dabei bleiben der Durchflussbeiwert bzw. der Druckabfall längs eines Strömungskanals, sowie der Ventilhub, die Ventilschaltzeit und die Dauerfestigkeit der Ventileinrichtung im Wesentlichen unverändert.

Bei der erfindungsgemäßen Ventileinrichtung handelt es sich insbesondere um ein Rückschlagventil.

Die Erfindung geht von der Überlegung aus, dass eine hohe Widerstandsfähigkeit gegen Kavitationserosion in einem durch einen Dichtabschnitt und einen Dichtsitz gebildeten Dichtbereich einerseits, und ein hoher Durchflussbeiwert der Ventileinrichtung andererseits, gegensätzliche Anforderungen sein können. Zwar ist es möglich, mittels dem Dichtbereich stromaufwärts unmittelbar vorgelagerter Fasen oder Rundungen den Durchflussbeiwert der Ventileinrichtung - bei unverändertem Ventilhub - zu erhöhen. Doch ergibt sich dadurch bei geschlossener Ventileinrichtung ein im Querschnitt keilartiger Spalt zwischen dem Dichtabschnitt und dem Dichtsitz. Die aufgrund von Kavitationseffekten gebildeten Blasen des Fluids - abhängig von dem jeweiligen Druck - werden in diesem keilartigen Spalt zuletzt und somit vergleichsweise schnell zerfallen, wodurch es zu einer Erosion des Dichtabschnitts und/oder des Dichtsitzes kommen kann.

Die Begrenzungswand ist länger als die Prallwand. Hierdurch wird eine Abrisskante in Form eines länglichen Zerfallraums geschaffen, wodurch eine Fluidströmung im Bereich des Zerfallraums parallel zum Dichtabschnitt bzw. zum, Dichtsitz und vollständig oder zumindest im Wesentlichen vollständig umgelenkt wird, sodass der Dichtbereich in seinem gesamten Querschnitt durchströmt wird. Auf diese Weise wird ein hoher Durchflussbeiwert beibehalten und gleichzeitig ein besonders hoher Schutz vor Kavitationserosion erreicht. Hierdurch kann eine Ventileinrichtung mit einer besonders langen Lebensdauer bereitgestellt werden. Außerdem kann ein vergleichsweise schmaler Dichtsitz vorgesehen sein, was die Dichtwirkung der Ventileinrichtung und auch dessen akustische Eigenschaften verbessert.

Die Begrenzungswand erstreckt sich zumindest im Wesentlichen senkrecht zu einer Bewegungsachse des Ventilkörpers. Im Rahmen der Erfindung wird unter "im Wesentlichen senkrecht" "senkrecht im Sinne eines Winkels von 90°" verstanden.

In Ausgestaltung der Erfindung ist die Begrenzungswand um wenigstens 1 mm, vorzugsweise um mindestens 2 mm, insbesondere um mindestens 3 mm länger als die Prallwand. Diese Werte erlauben es, optimale Durchflussbeiwerte und hohen Schutz vor Kavitationserosion miteinander zu kombinieren.

Die vorstehend genannten Vorteile können auch dadurch erreicht werden, dass die Begrenzungswand um einen Faktor von mindestens 1,2, insbesondere um einen Faktor von mindestens 1,5 länger ist als die Prallwand.

Eine besonders gute Umlenkung eines Fluids aus einer Richtung parallel zu der Bewegungsachse des Ventilkörpers in eine hierzu radiale Richtung ergibt sich, wenn die Begrenzungswand ringscheibenförmig und vorzugsweise konzentrisch zu der Bewegungsachse des Ventilkörpers ist.

Eine weitere Verbesserung des Schutzes vor Kavitationserosion kann dadurch erreicht werden, dass die Prallwand hohlzylindrisch und vorzugsweise konzentrisch zu der Bewegungsachse des Ventilkörpers ist.

Die Erfindung sieht vor, dass sich an den Dichtsitz auf der der Begrenzungswand abgewandten Seite eine bezogen auf eine bei geöffneter Ventileinrichtung in dem Dichtbereich anliegende Fluidströmungsrichtung zumindest in Abschnitten geneigte Strömungsführungsfläche anschließt, und dass die Prallwand, der Dichtsitz und die Strömungsführungsfläche gemeinsam einen gehäuseseitigen Vorsprung bilden. Die Strömungsführungsfläche ermöglicht es, mit einer Wirbelbildung und entsprechenden Strömungsverlusten einhergehende "Totwassergebiete" zu verhindern.

Die Strömungsführungsfläche kann eben ausgebildet oder verrundet sein und ist bezogen auf die Strömungsrichtung um mindestens 10°, vorzugsweise um mindestens 20°, geneigt.

Zur Vermeidung eines Strömungsabrisses ist es bevorzugt, wenn die Strömungsführungsfläche bezogen auf die Fluidströmungsrichtung um höchstens 70° geneigt ist.

Weitere Ausgestaltungen sehen vor, dass der Ventilkörper plattenförmig, zylindrisch, kugelförmig oder kegelförmig ausgebildet ist oder es sich um ein Kegel-Kegel-Ventil handelt. Für diese Geometrien des Ventilkörpers bzw. der Ventileinrichtung kann die Erfindung vorteilhaft verwendet werden.

Nachfolgend werden beispielhafte Ausführungsformen der Erfindung unter Bezugnahme auf die Zeichnung erläutert. In der Zeichnung zeigen:
- Figur 1: ein vereinfachtes Schema eines Kraftstoffsystems mit einer Hochdruckpumpe und einer Ventileinrichtung;
- Figur 2: eine vereinfachte Schnittdarstellung einer Ausführungsform der Ventileinrichtung gemäß Figur 1 in geschlossenem Zustand; und
- Figur 3: einen in Figur 2 mit III bezeichneten Ausschnitt in vergrößerter Darstellung.

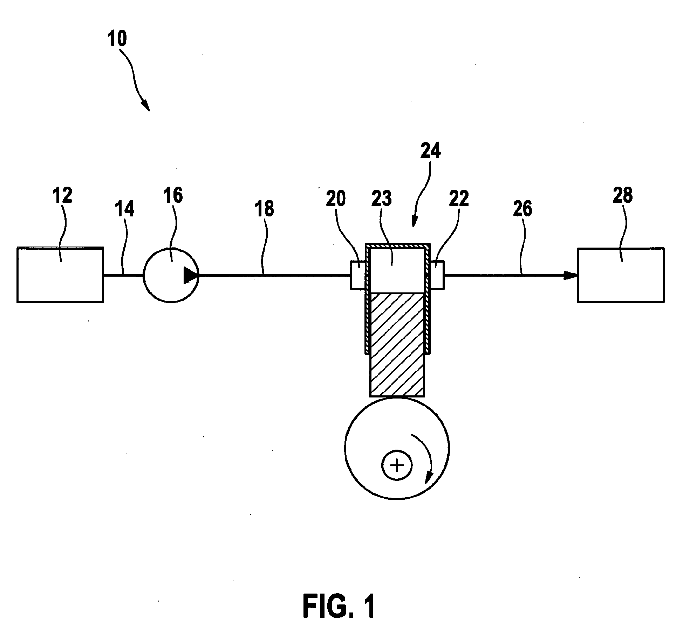

Figur 1 zeigt ein Kraftstoffsystem 10 einer Brennkraftmaschine in einer stark vereinfachten Darstellung. Aus einem Kraftstofftank 12 wird Kraftstoff über eine Saugleitung 14, mittels einer Vorförderpumpe 16, über eine Niederdruckleitung 18, und über ein Einlassventil 20 einem Förderraum 23 einer Hochdruckpumpe 24 zugeführt.

Das Einlassventil 20 ist beispielsweise ein Mengensteuerventil und von einem Elektromagneten betätigbar. Alternativ zu einem Elektromagneten kann auch beispielsweise ein Piezoaktor oder ein hydraulischer Aktor verwendet werden.

Die Hochdruckpumpe 24 weist ein Auslassventil auf, das in Form einer nachfolgend detaillierter beschriebenen Ventileinrichtung 22 ausgebildet ist. Die Ventileinrichtung 22 kommuniziert über eine Hochdruckleitung 26 mit einem Hochdruckspeicher 28.

Beim Betrieb des Kraftstoffsystems 10 fördert die Vorförderpumpe 16 Kraftstoff vom Kraftstofftank 12 in die Niederdruckleitung 18. Dabei bestimmt das Einlassventil 20 die dem Förderraum 23 der Hochdruckpumpe 24 zugeführte Kraftstoffmenge.

Die Funktion der Ventileinrichtung 22 besteht darin, in einer Förderphase der Hochdruckpumpe 24 zu öffnen, um eine Fluidverbindung zwischen dem Förderraum 23 und dem Hochdruckspeicher 28 herzustellen, damit der Hochdruckspeicher 28 mit druckbeaufschlagtem Fluid gefüllt werden kann. In einer Saugphase der Hochdruckpumpe 24 schließt die Ventileinrichtung 22, um einen unerwünschten Rückfluss von Fluid aus dem Hochdruckspeicher 28 in den Förderraum 23 zu verhindern.

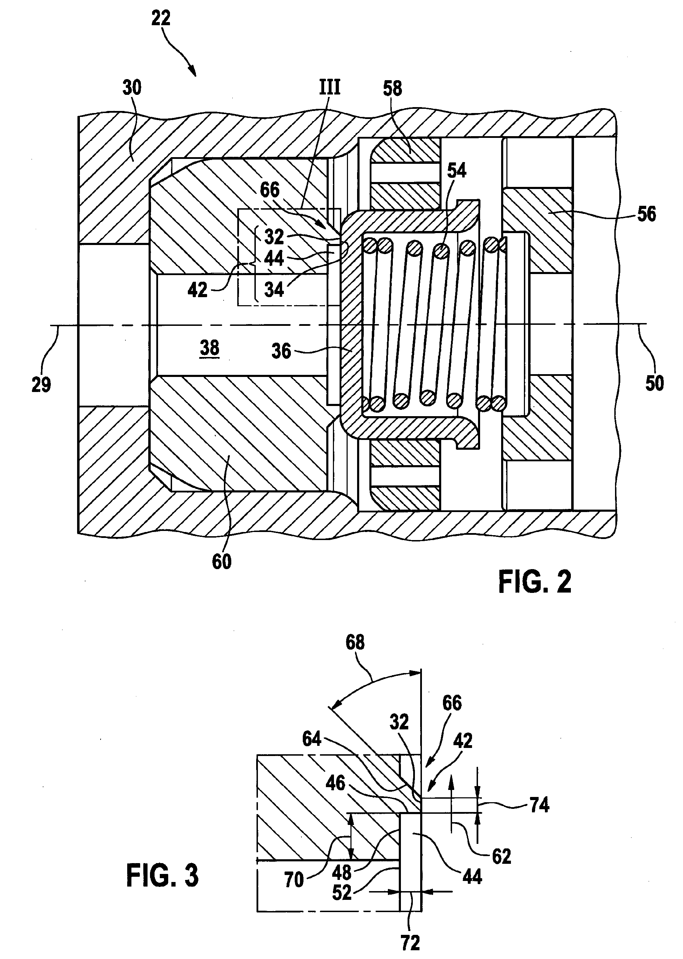

Figur 2 zeigt eine Ausführungsform der Ventileinrichtung 22 gemäß Figur 1 in einer vereinfachten Schnittdarstellung. Die in der Zeichnung dargestellten Elemente der Ventileinrichtung 22 sind im Wesentlichen rotationssymmetrisch um eine Längsachse 29 ausgeführt und umfassen ein Gehäuse 30 mit einem Dichtsitz 32, an dem ein Dichtabschnitt 34 eines Ventil körpers 36 bei geschlossener Ventileinrichtung 22 anliegt.

Die Ventileinrichtung 22 weist stromaufwärts des Dichtsitzes 32 einen sich parallel zu der Längsachse 29 erstreckenden Strömungskanal 38 auf.

Der Dichtsitz 32 und der Dichtabschnitt 34 sind flächig und parallel zueinander ausgeführt und bilden gemeinsam einen Dichtbereich 42. Stromaufwärts von dem Dichtbereich 42 und stromabwärts des Strömungskanals 38 ist mittels einer stufenartigen Ausnehmung in dem Gehäuse 30 ein Zerfallraum 44 gebildet, der von einer sich vom Dichtbereich 42 bzw. dessen Ebene rechtwinklig erstreckenden Prallwand 46 und von einer zu der Prallwand 46 winkligen, insbesondere senkrechten Begrenzungswand 48 begrenzt ist.

Die Begrenzungswand 48 erstreckt sich senkrecht zu einer Bewegungsachse 50, entlang welcher der Ventilkörper 36 für ein Öffnen und Schließen der Ventileinrichtung 22 bewegbar ist. Die Bewegungsachse 50 und die Längsachse 29 sind vorzugsweise zueinander parallel und insbesondere miteinander identisch.

Ein Fluid, insbesondere Kraftstoff, strömt zunächst innerhalb des Strömungskanals 38 im Wesentlichen parallel zu der Längsachse 29 und wird dann vor dem Ventilkörper 36 radial nach außen umgelenkt. Die Umlenkung der Strömung erfolgt stromabwärts einer den Strömungskanal 38 endseitig begrenzenden Kante 52 vergleichsweise frühzeitig und verlustarm mittels der hydraulischen Wirkung des Zerfallraums 44.

Die Ventileinrichtung 22 umfasst außerdem eine Ventilfeder 54, welche den Ventilkörper 36 mit einer Schließkraft beaufschlagt. Die Ventilfeder 54 stützt sich an einem mit dem Gehäuse 30 verbundenen oder einstückig mit diesem ausgebildeten Abstützelement 56 ab.

Zur Führung des Ventilkörpers 36 längs der Bewegungsachse 50 ist ein Führungselement 58 vorgesehen, welches mit dem Gehäuse 30 verbunden oder einstückig mit diesem ausgebildet ist.

Der Strömungskanal 38, der Zerfallraum 44 und/oder der Dichtsitz 32 können von dem Gehäuse 30 gebildet sein, oder - wie in Figur 2 dargestellt - von einem fest mit dem Gehäuse 30 verbundenen Gehäuseeinsatz 60.

In einem geöffneten Zustand der Ventileinrichtung 22 strömt Fluid, insbesondere Kraftstoff, in dem Dichtbereich 42 in einer Fluidströmungsrichtung 62 (vergleiche Figur 3). An den Dichtsitz 32 schließt sich auf der der Prallwand 46 abgewandten Seite des Dichtsitzes 32 eine Strömungsführungsfläche 64 an.

Die Prallwand 46, der Dichtsitz 32 und die Strömungsführungsfläche 64 bilden gemeinsam einen gehäuseseitigen Vorsprung 66. Die Strömungsführungsfläche 64 ist relativ zu der Fluidströmungsrichtung 62 um einen Winkel 68 von ca. 10° bis ca. 80°, insbesondere von ca. 20° bis ca. 70 °, geneigt.

Die Begrenzungswand 48 ist vorzugsweise kreisringscheibenförmig ausgebildet und weist eine in radialer Richtung gemessene Länge 70 auf.

Die Prallwand 48 ist hohlzylindrisch und ist vorzugsweise konzentrisch zu der Bewegungsachse 50 des Ventilkörpers 36. Die Prallwand 48 weist eine parallel zu der Bewegungsachse 50 des Ventilkörpers 36 gemessene Länge 72 auf.

Der Dichtsitz 32 ist vorzugsweise kreisringscheibenförmig ausgebildet und weist eine in radialer Richtung gemessene Länge 74 auf.

Die Länge 70 der Begrenzungswand 48 ist größer als die Länge 72 der Prallwand 48. Beispielsweise ist die Länge 70 - wie in Figur 2 dargestellt - um einen Faktor 2 bis 3 größer als die Länge 72.

Vorzugsweise ist die Länge 70 der Begrenzungswand 48 größer als die Länge 74 des Dichtsitzes. Beispielsweise ist die Länge 70 - wie in Figur 2 dargestellt - um einen Faktor 2 bis 3 größer als die Länge 74.

Wenn - wie in Figur 2 dargestellt - der Ventilkörper 36 mit dem Dichtabschnitt 34 an dem Dichtsitz 32 anliegt, ist eine Fluidströmung unterbrochen. In einem Endbereich des Strömungskanals 38 können sich während des Betriebs des Kraftstoffsystems 10 in Strömungsrichtung vor dem Ventilkörper 36 (in der Zeichnung nicht dargestellte) Dampfblasen bilden, welche aufgrund von Kavitationseffekten als Folge von Druckpulsationen entstehen. Die Dampfblasen liegen mit einer vergleichsweise großen Fläche an dem Ventilkörper 36 an oder sind zu diesem zumindest eng benachbart.

Beim Implodieren solcher Dampfblasen verteilt sich die dabei entstehende Beanspruchung auf eine relativ große Fläche des Ventilkörpers 36 beziehungsweise der Prallwand 46 und der zu dem Dichtabschnitt 34 des Ventilkörpers parallelen Begrenzungswand 48, wodurch die Kavitationserosion deutlich reduziert wird. Insbesondere weist die Ventileinrichtung 22 in einer Umgebung der Dampfblasen keine sich verengenden (keilartigen) Raumabschnitte auf, welche besonders anfällig für Kavitationserosion sind.

## Patentansprüche

1. Ventileinrichtung (22), mit einem Gehäuse (30), einem Strömungskanal (38) und einem in dem Strömungskanal (38) angeordneten Ventilkörper (36), der einen Dichtabschnitt (34) aufweist, der bei geschlossener Ventileinrichtung (22) an einem gehäuseseitigen Dichtsitz (32) anliegt, wobei Dichtabschnitt (34) und Dichtsitz (32) zusammen einen Dichtbereich (42) bilden, wobei unmittelbar stromaufwärts von dem Dichtbereich (42) in dem Strömungskanal (38) bei geschlossener Ventileinrichtung (22) ein Zerfallraum (44) vorhanden ist, der von einer zu einer Bewegungsachse (50) des Ventilkörpers (36) zumindest im Wesentlichen senkrechten Begrenzungswand (48) und von einer zu der Begrenzungswand (48) winklig angeordneten Prallwand (46) begrenzt ist, wobei die Begrenzungswand (48) länger ist als die Prallwand (46), **dadurch gekennzeichnet, dass** sich an den Dichtsitz (32) auf der der Begrenzungswand (48) abgewandten Seite eine bezogen auf eine bei geöffneter Ventileinrichtung (22) in dem Dichtbereich (42) anliegende Fluidströmungsrichtung (62) zumindest in Abschnitten geneigte Strömungsführungsfläche (64) anschließt, und dass die Prallwand (46), der Dichtsitz (32) und die Strömungsführungsfläche (64) gemeinsam einen gehäuseseitigen Vorsprung (66) bilden.

2. Ventileinrichtung (22) nach Anspruch 1, **dadurch gekennzeichnet, dass** die Begrenzungswand (48) um wenigstens 1 mm, vorzugsweise um mindestens 2 mm, insbesondere um mindestens 3 mm länger als die Prallwand (46) ist.

3. Ventileinrichtung (22) nach einem der voranstehenden Ansprüche, **dadurch gekennzeichnet, dass** die Begrenzungswand (48) um einen Faktor von mindestens 1,2, insbesondere um einen Faktor von mindestens 1,5 länger als die Prallwand (46) ist.

4. Ventileinrichtung (22) nach einem der voranstehenden Ansprüche, **dadurch gekennzeichnet, dass** die Begrenzungswand (48) ringscheibenförmig und vorzugsweise konzentrisch zu der Bewegungsachse (50) des Ventilkörpers (36) ist.

5. Ventileinrichtung (22) nach einem der voranstehenden Ansprüche, **dadurch gekennzeichnet, dass** die Prallwand (46) hohlzylindrisch und vorzugsweise konzentrisch zu der Bewegungsachse (50) des Ventilkörpers (36) ist.

6. Ventileinrichtung (22) nach einem der voranstehenden Ansprüche, **dadurch gekennzeichnet, dass** die Strömungsführungsfläche (64) bezogen auf die Fluidströmungsrichtung (62) um mindestens 10°, vorzugsweise um mindestens 20°, geneigt ist.

7. Ventileinrichtung (22) nach einem der voranstehenden Ansprüche, **dadurch gekennzeichnet, dass** die Strömungsführungsfläche (64) bezogen auf die Fluidströmungsrichtung (62) um höchstens 70° geneigt ist.

8. Hochdruckpumpe (24) eines Kraftstoffsystems (10) einer Brennkraftmaschine, umfassend ein Auslassventil zum Auslassen von Kraftstoff aus einem Förderraum (23) der Hochdruckpumpe (24), **dadurch gekennzeichnet, dass** das Auslassventil eine Ventileinrichtung (22) nach wenigstens einem der voranstehenden Ansprüche umfasst oder als Ventileinrichtung (22) nach wenigstens einem der voranstehenden Ansprüche ausgebildet ist.

## Claims

1. Valve device (22), having a housing (30), a flow duct (38) and a valve body (36) which is arranged in the flow duct (38) and has a sealing section (34) which bears against a housing-side sealing seat (32) when the valve device (22) is closed, the sealing section (34) and the sealing seat (32) together forming a sealing region (42), there being a decaying space (44) immediately upstream of the sealing region (42) in the flow duct (38) when the valve device (22) is closed, which decaying space (44) is delimited by a boundary wall (48) which is at least substantially perpendicular with respect to a movement axis (50) of the valve body (36) and by a deflector wall (46) which is arranged at an angle with respect to the boundary wall (48), wherein the boundary wall (48) is longer than the deflector wall (46), **characterized in that** the sealing seat (32) is adjoined on the side which faces away from the boundary wall (48) by a flow guiding face (64) which is inclined at least in sections in relation to a fluid flow direction (62) which prevails in the sealing region (42) when the valve device (22) is open, and **in that** the deflector wall (46), the sealing seat (32) and the flow guiding face (64) together form a housing-side projection (66).

2. Valve device (22) according to Claim 1, **characterized in that** the boundary wall (48) is at least 1 mm, preferably at least 2 mm, in particular at least 3 mm longer than the deflector wall (46).

3. Valve device (22) according to one of the preceding claims, **characterized in that** the boundary wall (48) is longer than the deflector wall (46) by a factor of at least 1.2, in particular by a factor of at least 1.5.

4. Valve device (22) according to one of the preceding claims, **characterized in that** the boundary wall (48) is annular disk-shaped and is preferably concentric with respect to the movement axis (50) of the valve body (36).

5. Valve device (22) according to one of the preceding claims, **characterized in that** the deflector wall (46) is hollow-cylindrical and is preferably concentric with respect to the movement axis (50) of the valve body (36).

6. Valve device (22) according to one of the preceding claims, **characterized in that** the flow guiding face (64) is inclined in relation to the fluid flow direction (62) by at least 10°, preferably by at least 20°.

7. Valve device (22) according to one of the preceding claims, **characterized in that** the flow guiding face (64) is inclined in relation to the fluid flow direction (62) by at most 70°.

8. High pressure pump (24) of a fuel system (10) of an internal combustion engine, comprising an outlet valve for discharging fuel from a delivery space (23) of the high pressure pump (24), **characterized in that** the outlet valve comprises a valve device (22) according to at least one of the preceding claims or is configured as a valve device (22) according to at least one of the preceding claims.

## Revendications

1. Dispositif de soupape (22), comprenant un boîtier (30), un canal d'écoulement (38) et un corps de soupape (36) disposé dans le canal d'écoulement (38), qui présente une portion d'étanchéité (34) qui, lorsque le dispositif de soupape (22) est fermé, s'applique contre un siège d'étanchéité du côté du boîtier (32), la portion d'étanchéité (34) et le siège d'étanchéité (32) formant ensemble une région d'étanchéité (42), un espace de décomposition (44) étant prévu directement en amont de la région d'étanchéité (42) dans le canal d'écoulement (38) lorsque le dispositif de soupape (22) est fermé, lequel est limité par une paroi de limitation (48) au moins essentiellement perpendiculaire à un axe de déplacement (50) du corps de soupape (36) et par une paroi d'impact (46) disposée de manière inclinée par rapport à la paroi de limitation (48), la paroi de limitation (48) étant plus longue que la paroi d'impact (46), **caractérisé en ce qu'**une surface de guidage d'écoulement (64), au moins inclinée en partie par rapport à une direction d'écoulement de fluide (62) s'établissant dans la région d'étanchéité (42) lorsque le dispositif de soupape (22) est ouvert, se raccorde au siège d'étanchéité (32) du côté opposé à la paroi de limitation (48) et **en ce que** la paroi d'impact (46), le siège d'étanchéité (32) et la surface de guidage d'écoulement (64) forment ensemble une saillie du côté du boîtier (66).

2. Dispositif de soupape (22) selon la revendication 1, **caractérisé en ce que** la paroi de limitation (48) est plus longue que la paroi d'impact (46) d'au moins 1 mm, de préférence d'au moins 2 mm, en particulier d'au moins 3 mm.

3. Dispositif de soupape (22) selon l'une quelconque des revendications précédentes, **caractérisé en ce que** la paroi de limitation (48) est plus longue que la paroi d'impact (46) d'un facteur d'au moins 1,2, en particulier d'un facteur d'au moins 1,5.

4. Dispositif de soupape (22) selon l'une quelconque des revendications précédentes, **caractérisé en ce que** la paroi de limitation (48) est en forme de disque annulaire et est de préférence concentrique à l'axe de déplacement (50) du corps de soupape (36).

5. Dispositif de soupape (22) selon l'une quelconque des revendications précédentes, **caractérisé en ce que** la paroi d'impact (46) est cylindrique creuse et est de préférence concentrique à l'axe de déplacement (50) du corps de soupape (36).

6. Dispositif de soupape (22) selon l'une quelconque des revendications précédentes, **caractérisé en ce que** la surface de guidage d'écoulement (64) est inclinée par rapport à la direction d'écoulement de fluide (62) d'au moins 10°, de préférence d'au moins 20°.

7. Dispositif de soupape (22) selon l'une quelconque des revendications précédentes, **caractérisé en ce que** la surface de guidage d'écoulement (64) est inclinée d'au plus 70° par rapport à la direction d'écoulement de fluide (62).

8. Pompe haute pression (24) d'un système de carburant (10) d'un moteur à combustion interne, comprenant une soupape d'échappement pour l'échappement de carburant hors d'un espace de refoulement (23) de la pompe haute pression (24), **caractérisée en ce que** la soupape d'échappement comprend un dispositif de soupape (22) selon au moins l'une quelconque des revendications précédentes ou est réalisée sous forme de dispositif de soupape (22) selon au moins l'une quelconque des revendications précédentes.
